(19) Europäisches Patentamt
European Patent Office
Office européen des brevets

(11) **EP 4 489 337 A1**

(12) **EUROPEAN PATENT APPLICATION**
published in accordance with Art. 153(4) EPC

(43) Date of publication:
**08.01.2025 Bulletin 2025/02**

(21) Application number: **22929358.4**

(22) Date of filing: **03.03.2022**

(51) International Patent Classification (IPC):
**H04L 5/00** *(2006.01)*

(52) Cooperative Patent Classification (CPC):
**H04L 5/00**

(86) International application number:
**PCT/CN2022/079154**

(87) International publication number:
**WO 2023/164909 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **SRS SENDING METHOD AND APPARATUS, SRS RECEIVING METHOD AND APPARATUS,
DEVICE, MEDIUM, AND PRODUCT**

(57) The present disclosure relates to the field of communications. Disclosed are an SRS sending method and apparatus, an SRS receiving method and apparatus, a device, a medium, and a product. The method comprises: receiving configuration information of an SRS resource, the SRS resource comprising eight antenna ports; and mapping SRSs corresponding to at least two antenna port groups onto physical resources corresponding to different transmission combs, and sending the SRSs corresponding to the at least two antenna port groups at the same time, the at least two antenna port groups being obtained by dividing the eight antenna ports. The method can support SRS sending of the eight antenna ports.

receiving configuration information of an SRS resource, the SRS resource including 8 antenna ports ⌐ 210

mapping SRSs corresponding to at least two antenna port groups to physical resources corresponding to different transmission combs, and sending the SRSs corresponding to the at least two antenna port groups simultaneously, wherein the at least two antenna port groups are obtained based on grouping the 8 antenna ports ⌐ 220

FIG. 2

**Description**

TECHNICAL FIELD

The disclosure relates to a communication field, in particular to a method for sending a sounding reference signal (SRS), a method for receiving an SRS, an apparatus, a device, a medium and a product.

BACKGROUND

In a 5G new radio system, an uplink sounding reference signal (SRS) is used to measure and estimate a channel quality of an uplink channel.
During sending the uplink SRS, a plurality of antenna ports may be configured for a user equipment (UE), and the UE supports sending the SRS at up to 4 antenna ports.

SUMMARY

Embodiments of the disclosure provide a method for sending a sounding reference signal (SRS), a method for receiving an SRS, an apparatus, a device, a medium and a product. The technical solutions are provided as follows.
According to an aspect of embodiments of the disclosure, a method for sending an SRS, performed by a terminal, is provided. The method includes:

　　receiving configuration information of an SRS resource, the SRS resource including 8 antenna ports; and
　　mapping SRSs corresponding to at least two antenna port groups to physical resources corresponding to different transmission combs, and sending the SRSs corresponding to the at least two antenna port groups simultaneously, in which the at least two antenna port groups are obtained based on grouping the 8 antenna ports.

According to another aspect of embodiments of the disclosure, a method for receiving an SRS, performed by a network device, is provided. The method includes:

　　sending configuration information of an SRS resource, the SRS resource including 8 antenna ports; and
　　receiving SRSs corresponding to at least two antenna port groups on physical resources corresponding to different transmission combs simultaneously, in which the at least two antenna port groups are obtained based on grouping the 8 antenna ports.

According to another aspect of embodiments of the disclosure, an apparatus for sending an SRS is provided. The apparatus includes:

　　a first receiving module, configured to receive configuration information of an SRS resource, the SRS resource including 8 antenna ports; and
　　a first sending module, configured to map SRSs corresponding to at least two antenna port groups to physical resources corresponding to different transmission combs, and sending the SRSs corresponding to the at least two antenna port groups simultaneously, in which the at least two antenna port groups are obtained based on grouping the 8 antenna ports.

According to another aspect of embodiments of the disclosure, an apparatus for receiving an SRS is provided. The apparatus includes:

　　a second sending module, configured to send configuration information of an SRS resource, the SRS resource including 8 antenna ports; and
　　a second receiving module, configured to receive SRSs corresponding to at least two antenna port groups on physical resources corresponding to different transmission combs simultaneously, in which the at least two antenna port groups are obtained based on grouping the 8 antenna ports.

According to another aspect of embodiments of the disclosure, a terminal is provided. The terminal includes:

　　a processor;
　　a transceiver coupled to the processor;
　　in which the processor is configured to load and execute executable instructions to implement the method for sending an SRS as described in the above aspects.

According to another aspect of embodiments of the disclosure, a network device is provided. The network device includes:

a processor;
a transceiver coupled to the processor;
in which the processor is configured to load and execute executable instructions to implement the method for receiving an SRS as described in the above aspects.

According to a seventh aspect of embodiments of the disclosure, a computer-readable storage medium having at least one instruction, at least one program segment, a code set or an instruction set stored thereon is provided. When the at least one instruction, the at least one program segment, the code set or the instruction set is loaded and executed by a processor, the method for sending an SRS as described in the above aspects or the method for receiving an SRS is implemented.

According to an eighth aspect of embodiments of the disclosure, a computer program product (or computer program) including computer instructions is provided. The computer instructions are stored in a computer-readable storage medium and can be read by a processor of a computer device from the computer-readable storage medium. When the computer instructions are executed by the processor, the computer is caused to implement the method for sending an SRS as described in the above aspects or the method for receiving an SRS.

The technical solutions provided by embodiments of the disclosure may include the following beneficial effects.

In the above method for sending an SRS, the 8 antenna ports in the SRS resource are divided into at least two antenna port groups. After receiving the configuration information of the SRS resource, the terminal maps the SRSs corresponding to the at least two antenna port groups on the physical resources corresponding to different transmission combs and sends the SRSs corresponding to the at least two antenna port groups simultaneously. This method is used to support implementation of related functions in a situation where the terminal uses the 8 sending antenna ports, for example, used to support codebook-based channel quality sounding in a situation where the terminal uses the 8 sending antenna ports, or used to support non-codebook-based channel quality sounding in a situation where the terminal uses the 8 sending antenna ports, or used to support channel quality sounding during antenna switching in a situation where the terminal uses the 8 sending antenna ports.

It is understandable that the foregoing general description and the following detailed descriptions are exemplary and explanatory only and do not limit the disclosure.

## BRIEF DESCRIPTION OF THE DRAWINGS

In order to clearly illustrate technical solutions of embodiments of the disclosure, a brief description of drawings used in embodiments is given below. Obviously, the drawings in the following descriptions are only part of the embodiments of the disclosure, and for those skilled in the art, other drawings can be obtained according to these drawings without inventive work.

FIG. 1 is a block diagram illustrating a communication system according to an exemplary embodiment.
FIG. 2 is a flowchart illustrating a method for sending a sounding reference signal (SRS) according to an exemplary embodiment.
FIG. 3 is a schematic diagram illustrating mapping of an SRS resource according to an exemplary embodiment.
FIG. 4 is a flowchart illustrating a method for sending an SRS according to another exemplary embodiment.
FIG. 5 is a schematic diagram illustrating mapping of an SRS resource according to another exemplary embodiment.
FIG. 6 is a schematic diagram illustrating mapping of an SRS resource according to another exemplary embodiment.
FIG. 7 is a flowchart illustrating a method for sending an SRS according to another exemplary embodiment.
FIG. 8 is a schematic diagram illustrating mapping of an SRS resource according to another exemplary embodiment.
FIG. 9 is a schematic diagram illustrating mapping of an SRS resource according to another exemplary embodiment.
FIG. 10 is a schematic diagram illustrating mapping of an SRS resource according to another exemplary embodiment.
FIG. 11 is a flowchart illustrating a method for receiving an SRS according to an exemplary embodiment.
FIG. 12 is a block diagram illustrating an apparatus for sending an SRS according to an exemplary embodiment.
FIG. 13 is a block diagram illustrating an apparatus for receiving an SRS according to an exemplary embodiment.
FIG. 14 is a schematic diagram illustrating a terminal according to an exemplary embodiment.
FIG. 15 is a schematic diagram illustrating an access network device according to an exemplary embodiment.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

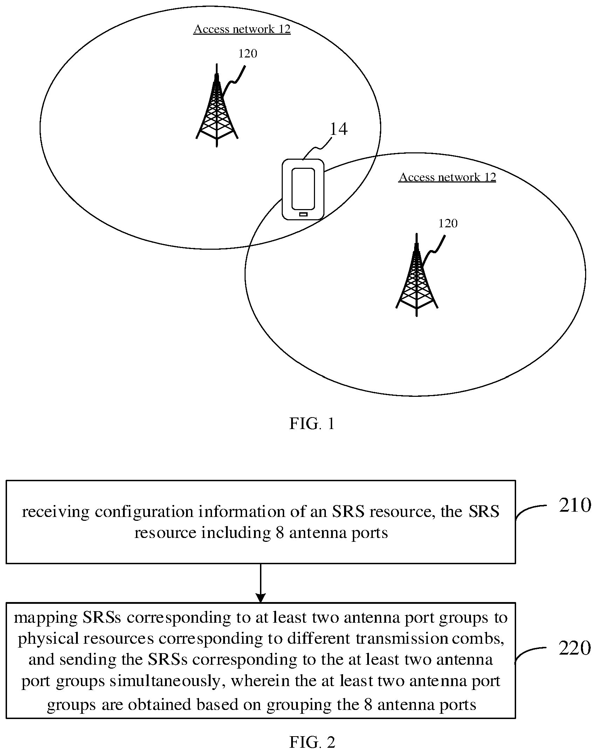

FIG. 1 is a block diagram of a communication system according to an exemplary embodiment. The communication system includes: an access network 12 and a user equipment (UE) 14.

The access network 12 includes several network devices 120. The network device 120 may be a base station deployed in the access network to provide wireless communication functions for the UE 14. The base station may include various forms of macro base stations, micro base stations, relay stations, access points, etc. In systems that use different radio access technologies, the name of device with the functions of the base station may be different. For example, in a long term evolution (LTE) system, it is called eNodeB (eNB), but in a 5G new radio (NR) system, it is called gNodeB (gNB). As communication technologies evolve, "base station" may be described differently. For the convenience of description in the embodiments of the disclosure, the above-described devices that provide wireless communication functions for the UE 14 are collectively referred to as a network device.

The UE 14 may include a variety of handheld devices with wireless communication functions, vehicle-mounted devices, wearable devices, computing devices, or other processing devices connected to a wireless modem, and various forms of UEs, mobile stations (MSs), terminal devices, etc. For ease of description, the devices mentioned above are collectively referred to as a UE. The network device 120 and the UE 14 may communicate with each other via some sort of air interface technology, such as a Uu interface.

For example, there are two kinds of communication scenarios between the network device 120 and the UE (terminal) 14, i.e., uplink communication scenario and downlink communication scenario. Uplink communication refers to sending signals to the network device 120, and downlink communication refers to sending signals to the UE 14.

The technical solutions of embodiments of the disclosure can be applied to various types of communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, an Advanced long Term Evolution (LTE-A) system, a NR system, an evolved system of NR system, a LTE-based access to Unlicensed spectrum (LTE-U) system, a NR-U system, a Universal Mobile Telecommunication System (UMTS), a Worldwide Interoperability for Microwave Access (WiMAX) communication system, Wireless Local Area Networks (WLAN), Wireless Fidelity (WiFi), and a next generation communication system or other communication systems, etc.

Generally, traditional communication systems support a limited number of connections and are easy to implement. However, with the development of communication technologies, mobile communication systems will not only support traditional communications, but also support Device to Device (D2D) communication, Machine to Machine (M2M) communication, Machine Type Communication (MTC), Vehicle to Vehicle (V2V) communication, and Vehicle to Everything (V2X) system, etc. Embodiments of the disclosure may also be applied to these communication systems.

FIG. 2 is a flowchart illustrating a method for sending a sounding reference signal (SRS) according to an exemplary embodiment. The method is applied to the terminal in the communication system shown in FIG. 1. The method includes following steps.

At step 210, configuration information of an SRS resource is received, the SRS resource includes 8 antenna ports.

For example, the terminal receives the configuration information of the SRS resource sent by the network device. The configuration information is used to configure one SRS resource for the terminal.

The configured SRS resource includes 8 antenna ports. That is, the configuration information of the SRS resource includes: a number of antenna ports of SRSs which is $\bar{N}_{ap}^{SRS}=8$ , and port numbers of the 8 antenna ports which are $P_i$ =1000+i, i $\in$ {0,1,2,3,4,5,6,7}.

Or, the configured SRS resource includes at least two antenna port groups (i.e., K antenna port groups) corresponding to the 8 antenna ports. That is, the configuration information of the SRS resource includes: a number of antenna ports of the SRS which is $N_{ap}^{SRS}=8$ ; a number of antenna ports in each antenna port group which is 8/K, K=2, 4 or 8; and port numbers of the 8 antenna ports which are $P_i$ =1000+i, i $\in$ {0,1,2,3,4,5,6,7}. Or, the configuration information of the SRS resource includes: a number of antenna ports of the SRS which is $N_{ap}^{SRS}=8$ ; a number of antenna ports in each antenna port group which is 8/K, K=2, 4 or 8; and port numbers of 8/K antenna ports in each antenna port group.

At step 220, SRSs corresponding to at least two antenna port groups are mapped to physical resources corresponding to different transmission combs, and the SRSs corresponding to the at least two antenna port group are sent simultaneously, in which the at least two antenna port groups are obtained based on grouping the 8 antenna ports.

The terminal maps one SRS resource on the same physical resource (PR) when measuring a channel quality of an uplink channel. For example, the PR refers to consecutive carrier resources in a frequency domain, and one physical resource block (PRB) corresponds to 12 continuous carriers in the frequency domain and one slot in a time domain.

For example, the uplink channel includes at least one of: a Physical Uplink Control CHannel (PUCCH) and a Physical Uplink Shared CHannel (PUSCH). The terminal may map one SRS resource on the PR of the PUCCH and/or the PUSCH.

For example, the terminal maps one SRS resource on the same PR according to the configuration information. The above configuration information includes at least one of following parameters:

a transmission comb parameter $K_{TC}$;

a frequency-domain offset parameter $\bar{k}_{TC}$;

an SRS configuration bandwidth;

a cyclic shift parameter $n_{SRS}^{cs}$;

a number of antenna ports of the SRSs $N_{ap}^{SRS}$; or

a time-domain location of transmission comb.

The transmission comb parameter is used to indicate a comb structure of the SRS resource in the frequency domain, i.e., the SRS resource is not mapped on consecutive subcarriers. The transmission comb parameter is represented by comb, comb=$K_{TC}$, a value of $K_{TC}$ is a positive integer. Adjacent subcarriers in the SRS resource are spaced by ($K_{TC}$-1) subcarriers, i.e., adjacent resource element (RE) resources in the SRS resource are spaced by ($K_{TC}$-1) subcarriers. For example, if comb=8, adjacent RE resources in one SRS resource are spaced by 7 subcarriers. The frequency-domain offset parameter is an offset of subcarriers occupied by the 1st RE resource in one SRS resource, and the frequency-domain offset parameter is a non-negative integer less than the transmission comb parameter. The SRS configuration bandwidth is a frequency bandwidth occupied by the SRS resource. The cyclic shift parameter is a number of bits by which the sequence is cyclically shifted. The antenna port is a logical transmitting channel defined by a reference signal, and the antenna port is mapped to a physical antenna for sending of signals. The time-domain location of the transmission comb is a symbol occupied by the transmission comb in the slot.

For example, the above configuration information may also include: a length of a ZC sequence, which is a numerical length of the ZC sequence. For example, the terminal generates 8 SRS sequences based on at least one ZC sequence, and carries the SRSs of the 8 antenna ports through the 8 SRS sequences.

For example, each antenna port group corresponds to one transmission comb. The terminal maps the SRSs corresponding to the at least two antenna port groups on PRs corresponding to at least two transmission combs, and sends the SRSs corresponding to the at least two antenna port groups simultaneously.

For example, the at least two antenna port groups may be antenna port groups mapped to the same antenna panel or different antenna panels. That is, the at least two antenna ports are antenna port groups mapped to M antenna panels, M being a positive integer less than or equal to 8. For example, a first antenna port group of the at least two antenna port groups is mapped to a first antenna panel, and a second antenna port group of the at least two antenna port groups is mapped to a second antenna panel.

For example, the terminal occupies N consecutive orthogonal frequency-division multiplexing (OFDM) symbols for one SRS resource, N={1, 2, 4}.

For example, a function of the SRS resource includes one of:

codebook;
antenna switching; or
non-codebook.

The terminal may perform codebook-based channel quality sounding, channel quality sounding during antenna switching, or non-codebook-based channel quality sounding.

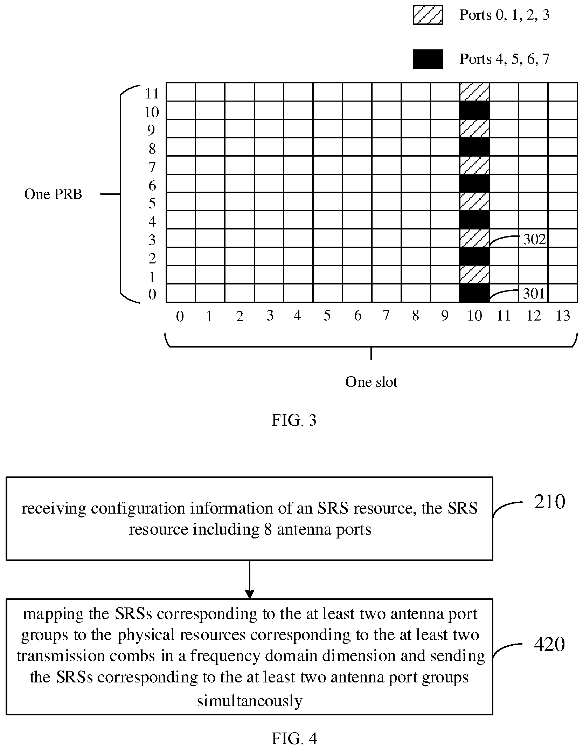

For example, a value range of the transmission comb parameter $K_{TC}$ is {2,4,8,12}. For example, taking $K_{TC}$=2 for example, under a condition that the transmission comb parameter is equal to 2, the terminal maps two transmission combs, i.e., a first transmission comb 301 and a second transmission comb 302, on one PRB. A frequency-domain offset parameter of the first transmission comb 301 is 0, and a frequency-domain offset parameter of the second transmission comb 302 is 1. Adjacent subcarriers in each transmission comb are spaced by 1 subcarrier, and subcarriers occupied by the first transmission comb 301 include a subcarrier 0, a subcarrier 2, a subcarrier 4, a subcarrier 6, a subcarrier 8 and a subcarrier 10, and subcarriers occupied by the second transmission comb 302 include a subcarrier 1, a subcarrier 3, a subcarrier 5, a subcarrier 7, a subcarrier 9 and a subcarrier 11. The first transmission comb 301 and the second transmission comb 302 are located on 10 symbols within one slot. 4 antenna ports including a port 0, a port 1, a port 2, and a port 3 are mapped to the first transmission comb 301, and the remaining 4 antenna ports including a port 4, a port 5, a port 6 and a port 7 are mapped to the second transmission comb 302. For example, each transmission comb resource of the two transmission combs in FIG. 3 may occupy one OFDM symbol.

For example, a maximum value of the cyclic shift parameter of the transmission combs corresponding to the at least two antenna port groups is $n_{\text{SRS}}^{\text{cs,max}}$, and a value range of the cyclic shift parameter $n_{\text{SRS}}^{\text{cs}}$ configured for the 8 antenna ports is $n_{\text{SRS}}^{\text{cs}} \in \{0,1,2,...,n_{\text{SRS}}^{\text{cs,max}} - 1\}$.

Optionally, a maximum value of a number of the cyclic shift parameters supported by the transmission comb parameter is 8, and the value range of $n_{\text{SRS}}^{\text{cs}}$ is $n_{\text{SRS}}^{\text{cs}} \in \{0,1,2,...,n_{\text{SRS}}^{\text{cs,max}} - 1\}$, then the terminal generates the SRS resource by using 8 cyclic shift parameters.

For example, a maximum value of a number of the cyclic shift parameters supported by the transmission comb parameter is 12, and the value range of $n_{\text{SRS}}^{\text{cs}}$ is $n_{\text{SRS}}^{\text{cs}} \in \{0,1,...,n_{\text{SRS}}^{\text{cs,max}} - 1\}$, then the terminal generates the SRS resource by using some of the 12 cyclic shift parameters, e.g., generates the SRS resource by actually using 8 of the 12 cyclic shift parameters.

For example, the above configuration information includes one cyclic shift parameter corresponding to the at least two antenna port groups. After receiving the configuration information, the terminal calculates the cyclic shift parameter corresponding to all antenna ports in the at least two antenna port groups based on the configured cyclic shift parameter.

Or, the above configuration information includes one cyclic shift parameter corresponding to each antenna port of the at least two antenna port groups. After receiving the configuration information, for each antenna port group, the terminal calculates the cyclic shift parameter corresponding to all ports within the antenna port group by using the cyclic shift parameter configured for the antenna port group.

The cyclic shift parameter $n_{SRS}^{cs,i}$ is calculated by a following equation:

$$n_{\text{SRS}}^{\text{cs,i}} = \left(n_{\text{SRS}}^{\text{cs}} + \frac{n_{\text{SRS}}^{\text{cs,max}}(p_i - 1000)}{N_{\text{ap}}^{\text{SRS}}}\right) \bmod n_{\text{SRS}}^{\text{cs,max}}.$$

A cyclic offset $\alpha_i$ of a cyclic shift is calculated by the following equation:

$$\alpha_i = 2\pi \frac{n_{\text{SRS}}^{\text{cs,i}}}{n_{\text{SRS}}^{\text{cs,max}}},$$

where i in the equation is a positive integer, and $n_{\text{SRS}}^{\text{cs}}$ represents a configured cyclic shift parameter.

In some other embodiments, in a case where the transmission comb parameter $K_{\text{TC}}$ is equal to 8 or 12, one SRS resource can be mapped on one PRB, thus, a minimum bandwidth parameter corresponding to an SRS configuration bandwidth is greater than or equal to a bandwidth of 6 PRBs. Or, the SRS configuration bandwidth is a multiple of the bandwidth of 6 PRBs. Or, the minimum bandwidth parameter corresponding to the SRS configuration bandwidth is greater than or equal to a bandwidth of 8 PRBs. Or, the SRS configuration bandwidth is a multiple of the bandwidth of 8 PRBs. In this way, a plurality of RE resources can be mapped on a plurality of PRBs, to avoid unrepresentative measurement results of the channel quality of the uplink channel resulted by fewer RE resources.

In conclusion, according to the method for sending an SRS provided by the embodiments, the 8 antenna ports in the SRS resource are divided into at least two antenna port groups. After receiving the configuration information of the SRS resource, the terminal maps the SRSs corresponding to the at least two antenna port groups on the PRs corresponding to different transmission combs and sends the SRSs corresponding to the at least two antenna port groups simultaneously. This method is used to support implementation of related functions in a situation where the terminal uses the 8 sending antenna ports, for example, used to support codebook-based channel quality sounding in a situation where the terminal uses the 8 sending antenna ports, or used to support non-codebook-based channel quality sounding in a situation where the terminal uses the 8 sending antenna ports, or used to support channel quality sounding during antenna switching in a situation where the terminal uses the 8 sending antenna ports.

In some embodiments, the at least two antenna port groups may be mapped to at least two transmission combs with different frequency-domain offset parameters of the transmission combs. As illustrated in FIG. 4, step 220 may be realized by step 420 as follows.

At step 420, SRSs corresponding to at least two antenna port groups are mapped to PRs corresponding to at least two transmission combs in a frequency domain dimension, and the SRSs corresponding to the at least two antenna port groups are sent simultaneously.

The antenna port groups have a one-to-one correspondence with the transmission combs. Optionally, time-domain locations of the transmission combs corresponding to the at least two antenna port groups are identical. For example, the first transmission comb 301 and the second transmission comb 302 in FIG. 3 are both located on a symbol 10 of a slot.

Optionally, the transmission comb parameters $K_{TC}$ of the transmission combs corresponding to the at least two antenna port groups are identical. For example, the transmission comb parameter of each of the first transmission comb 301 and the second transmission comb 302 in FIG. 3 is 2.

Optionally, the frequency-domain offset parameters $\overline{k}_{TC}$ of the transmission combs corresponding to the at least two antenna port groups are different, and a value of $\overline{k}_{TC}$ is a non-negative integer less than $K_{TC}$. For example, if a value of the transmission comb parameter is 8, a value range of the frequency-domain offset parameters of the transmission combs corresponding to the at least two antenna port groups is {0,1,2,3,4,5,6,7}.

Optionally, some or all of the above frequency-domain offset parameters of the transmission combs are configured by the network device for the terminal. For example, the terminal receives a first frequency-domain offset parameter of a transmission comb corresponding to a first antenna port group, the first antenna port group being one of the at least two antenna port groups, and calculates other frequency-domain offset parameters of transmission combs corresponding to other antenna port groups based on the first frequency-domain offset parameter, other antenna port groups being antenna port groups other than the first antenna port group in the at least two antenna port groups.

Or, the terminal receives frequency-domain offset parameters of transmission combs corresponding to the at least two antenna port groups.

That is, the network device configures a frequency-domain offset parameter $\overline{k}_{TC}$ of one transmission comb for the terminal, and calculates frequency-domain offset parameters $k_{TC}^{(p_i)}$ of other transmission combs based on the frequency-domain offset parameter $\overline{k}_{TC}$. Or, the network device configures a set of frequency-domain offset parameters corresponding to at least two transmission combs for the terminal.

Optionally, the terminal calculates other frequency-domain offset parameters based on an adjacent transmission comb principle, calculates other frequency-domain offset parameters based on a uniform distribution principle, calculates other frequency-domain offset parameters based on a maximum interval principle, or calculates other frequency-domain offset parameters based on other predefined principles. For example, the above four principles of determining other frequency-domain offset parameters are described in the following.

1) Adjacent transmission comb principle

The frequency-domain offset parameter $k_{TC}^{(p_i)}$ of each of the ports corresponding to other transmission combs is generated according to the following equation:

$$k_{TC}^{(p_i)} = \overline{k}_{TC}+1;$$

$$k_{TC}^{(p_i)} = \overline{k}_{TC}-1.$$

For example, as illustrated in FIG. 3, any two adjacent subcarriers are subcarriers corresponding to the first transmission comb 301 and the second transmission comb 302 respectively.

2) Uniform distribution principle

The frequency-domain offset parameter $k_{\mathrm{TC}}^{(p_i)}$ of each of the ports corresponding to other transmission combs is generated according to the following equation:

$$k_{\mathrm{TC}}^{(p_i)} = \left(\bar{k}_{\mathrm{TC}} + K_{\mathrm{TC}}/2\right) \bmod K_{\mathrm{TC}}.$$

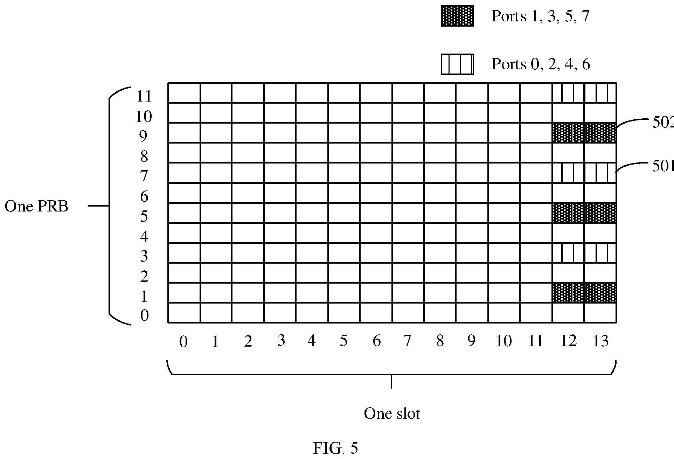

For example, as shown in FIG. 5, $K_{\mathrm{TC}}$ of a third transmission comb 501 and a fourth transmission comb 502 in the SRS resource is 4, that is, $K_{\mathrm{TC}}$=4, in which the frequency-domain offset parameter of the third transmission comb 501 is 3, and the frequency-domain offset parameter of the fourth transmission comb 502 is 1. The third transmission comb 501 and the fourth transmission comb 502 both occupy a symbol 12 and a symbol 13 of a slot. Adjacent subcarriers in each transmission comb are spaced by 3 subcarriers. The subcarriers occupied by the third transmission comb 501 include a subcarrier 1, a subcarrier 5 and a subcarrier 9, and the subcarriers occupied by the fourth transmission comb 502 include a subcarrier 3, a subcarrier 7, and a subcarrier 11. Among the 6 subcarriers corresponding to the two transmission combs, adjacent subcarriers corresponding to two transmission combs is spaced by 1 subcarrier, that is, the two transmission combs conform to the uniform distribution principle.

3) Maximum interval principle

A difference in the frequency-domain offset parameters between consecutive transmission combs is a maximum value. For example, when $K_{\mathrm{TC}}$=4, the first frequency-domain offset parameter is 0, and other frequency-domain offset parameters are 3, and thus at least two transmission combs meet the maximum interval principle.

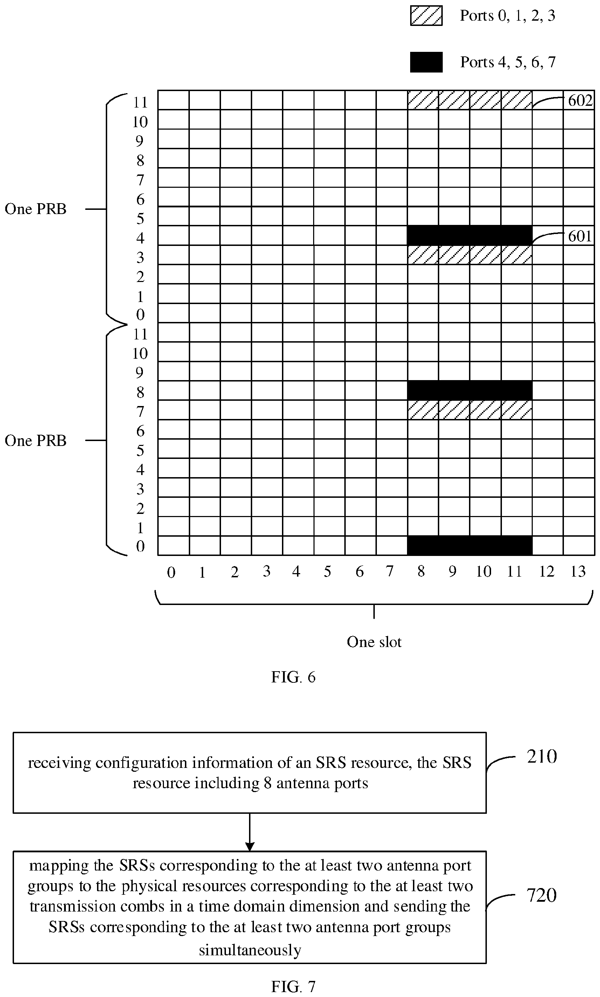

For example, as illustrated in FIG. 6, $K_{\mathrm{TC}}$ of a fifth transmission comb 601 and a sixth transmission comb 602 in the SRS resource is 8, that is, $K_{\mathrm{TC}}$=8, in which the frequency-domain offset parameter of the fifth transmission comb 601 is 0, and the frequency -domain offset parameter of the sixth transmission comb 602 is 1. The fifth transmission comb 601 and the sixth transmission comb 602 occupy 4 consecutive symbols 8-11 of the slot. Adjacent subcarriers in each transmission comb are spaced by 7 subcarriers. The subcarriers occupied by the fifth transmission comb 601 include a subcarrier 0 and a subcarrier 8 of the 1st PRB, and a subcarrier 4 of the 2nd PRB, and the subcarriers occupied by the sixth transmission comb 602 include a subcarrier 7 of the 1st PRB, and a subcarrier 3 and a subcarrier 11 of the 2nd PRB. Among the 6 subcarriers corresponding to the two transmission combs, two corresponding subcarriers are separated by 6 subcarriers, that is, the two transmission combs meet the maximum interval principle.

4) Other predefined principles

Other predefined principles may be other ways of determining other frequency-domain offset parameters defined by the protocol.

In conclusion, the method for sending an SRS provided in an embodiment supports a plurality of antenna port groups to send the SRS on a plurality of transmission combs in different frequency domain dimensions.

In some embodiments, the at least two antenna port groups are mapped to at least two transmission combs with the identical frequency-domain offset parameter of the transmission combs. As illustrated in FIG. 7, step 220 can be implemented by step 720.

At step 720, SRSs corresponding to at least two antenna port groups are mapped to PRs corresponding to at least two transmission combs in a time domain dimension, and the SRSs corresponding to the at least two antenna port groups are sent simultaneously.

The antenna port groups have a one-to-one correspondence with the transmission combs. Optionally, time domain locations of the transmission combs corresponding to the at least two antenna port groups are different and adjacent.

Optionally, transmission comb parameters $K_{\mathrm{TC}}$ of the transmission combs corresponding to the at least two antenna port groups are identical.

Optionally, frequency-domain offset parameters $\bar{k}_{\mathrm{TC}}$ of the transmission combs corresponding to the at least two antenna port groups are identical, and a value of $\bar{k}_{\mathrm{TC}}$ is a non-negative integer less than $K_{\mathrm{TC}}$. For example, if the transmission comb parameter is 8, a value range of the frequency-domain offset parameter of the transmission combs corresponding to the at least two antenna port groups is {0,1,2,3,4,5,6,7}.

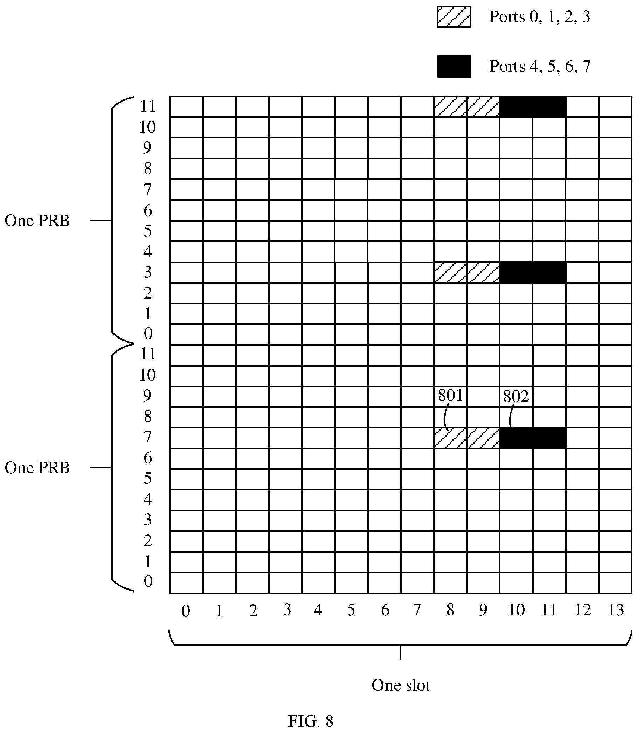

For example, as illustrated in FIG. 8, a seventh transmission comb 801 and an eighth transmission comb 802 are configured in the SRS resource. The transmission comb parameters of the seventh transmission comb 801 and the eighth transmission comb 802 are both 8, and the frequency-domain offset parameters of the seventh transmission comb 801 and the eighth transmission comb 802 are both 7. The seventh transmission comb 801 and the eighth transmission comb 802 are located on the same subcarrier, including: a subcarrier 7 on the first PRB, and a subcarrier 3 and a subcarrier 11 on the second PRB. The seventh transmission comb 801 and the eighth transmission comb 802 are located at different time-domain locations, the seventh transmission comb 801 is located on symbols 8 and 9 of a slot, and the eighth transmission comb 802 is located on symbols 10 and 11 of the slot. The time-domain locations of the seventh transmission comb 801 and the eighth transmission comb 802 are adjacent.

For example, the time-domain locations of at least two transmission combs may be located in the same slot or different slots. For example, the seventh transmission comb 801 and the eighth transmission comb 802 in FIG. 8 are located in the same slot.

Optionally, the network device configures the frequency-domain offset parameter of the transmission combs corresponding to the at least two antenna port groups for the terminal. For example, the terminal receives one frequency-domain offset parameter of the transmission combs corresponding to the at least two antenna port groups. That is, the network device configures one frequency -domain offset parameter $\bar{k}_{TC}$ of the transmission comb for the terminal.

In conclusion, the method for sending an SRS provided in an embodiment supports a plurality of antenna port groups to send the SRS on a plurality of transmission combs in different time domain dimensions.

In some embodiments, at least two antenna port groups are obtained by dividing the 8 antenna ports into different groups sequentially according to port numbers. As illustrated in FIG. 3, one antenna port group includes port 0, port 1, port 2 and port 3, and the other antenna port group includes port 4, port 5, port 6 and port 7.

In other embodiments, at least two antenna port groups are obtained by dividing the 8 antenna ports into a group containing even-numbered ports and a group containing odd-numbered ports. As illustrated in FIG. 5, one antenna port group includes port 0, port 2, port 4 and port 6, and the other antenna port group includes port 1, port 3, port 5 and port 7.

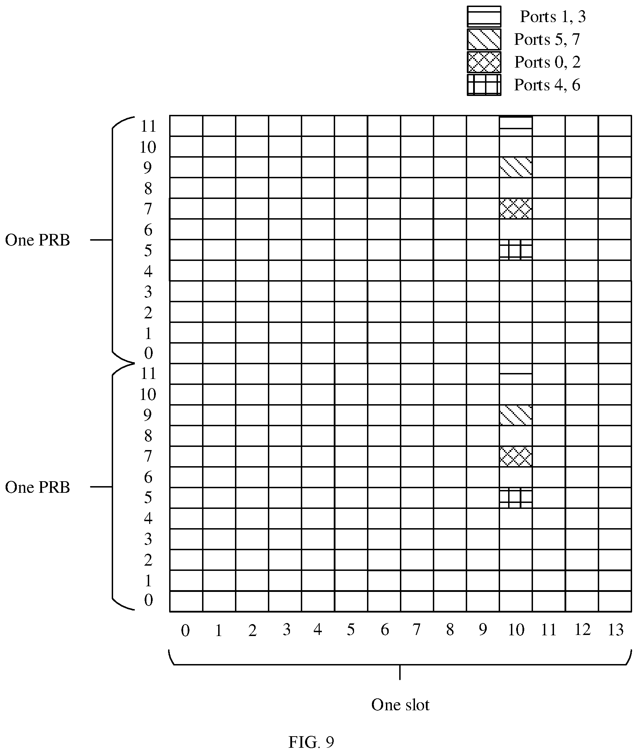

In other embodiments, the at least two antenna port groups are obtained by dividing odd-numbered ports in the 8 antenna ports into at least two first antenna port groups sequentially and dividing even-numbered ports in the 8 antenna ports into at least two second antenna port groups sequentially. As illustrated in FIG. 9, after dividing the 8 antenna ports into groups in the frequency domain, one first antenna port group includes port 1 and port 3, and the other first antenna port group includes port 5 and port 7, and one second antenna port group includes port 0 and port 2, and the other second antenna port group includes port 4 and port 6. For example, the transmission comb parameter configured in the SRS resource is 12, and the frequency-domain offset parameters of the transmission comb include {5, 7, 9, 11}. Therefore, there are four transmission combs having the same transmission comb structure.

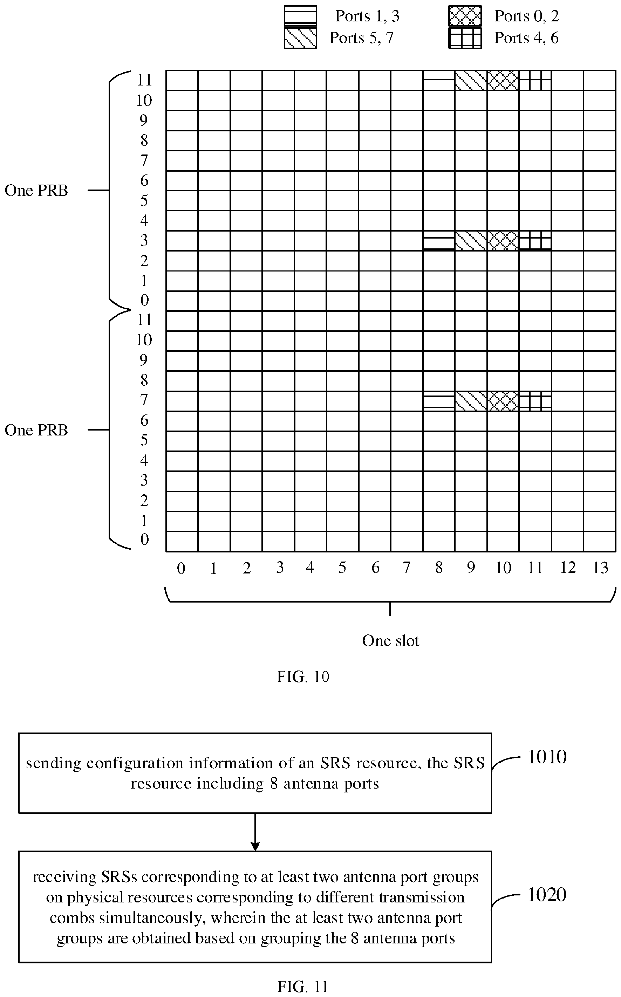

As shown in FIG. 10, ports with the port number being even among the eight antenna ports include: port 0, port 2, port 4 and port 6, and ports with the port number being odd among the eight antenna ports include: port 1, port 3, port 5 and port 7. After dividing the 8 antenna ports into groups in the time domain, a first antenna port group includes port 1 and port 3, and the other first antenna port group includes port 5 and port 7, and a second antenna port group includes port 0 and port 2, and the other second antenna port group includes port 4 and port 6.

In other embodiments, at least two antenna port groups are divided into groups according to predefined combinations in a protocol. For example, port 0, port 1, port 6 and port 7 predefined in the protocol are one antenna port group, and port 2, port 3, port 4 and port 5 predefined in the protocol are the other antenna port group.

In conclusion, the method for sending an SRS provided in an embodiment supports a plurality of port combinations to send the SRS on a plurality of transmission combs.

FIG. 11 is a flowchart illustrating a method for receiving an SRS according to an exemplary embodiment. The method is applied to the network device in the communication system shown in FIG. 1. The method includes following steps.

At step 1010, configuration information of an SRS resource is sent, the SRS resource includes 8 antenna ports.

The network device configures the configuration information of the SRS re source for the terminal and sends the configuration information of the SRS resource to the terminal.

In a case where at least two transmission combs configured by the configuration information of the SRS resource are in different frequency domain dimensions, the configuration information of the SRS resource includes at least one of:

one time-domain location of transmission combs corresponding to at least two antenna port groups;
one transmission comb parameter $K_{TC}$ corresponding to the at least two antenna port groups;
one frequency-domain offset parameter of a transmission comb corresponding to a first antenna port group in the at least two antenna port groups, the first antenna port group being one group among the at least two antenna port groups; or, frequency-domain offset parameters of at least two transmission combs corresponding to the at least two antenna port groups; and
one cyclic shift parameter corresponding to the at least two antenna port groups; or, one cyclic shift parameter corresponding to each antenna port of the at least two antenna port groups.

In a case where the at least two transmission combs configured by the configuration information of the SRS resource are in different time domain dimensions, the configuration information of the SRS resource includes at least one of:

at least two adjacent time-domain locations of transmission combs corresponding to the at least two antenna port groups;
one transmission comb parameter $K_{TC}$ corresponding to the at least two antenna port groups;
one frequency-domain offset parameter corresponding to the at least two antenna port groups; and
one cyclic shift parameter corresponding to at least two antenna port groups; or, one cyclic shift parameter corresponding to each antenna port of the at least two antenna port groups.

In a case where one cyclic shift parameter is configured for the at least two antenna port groups, the cyclic shift parameter is used to determine the cyclic shift parameter of all antenna ports in the at least two antenna port groups. In a case where one cyclic shift parameter is configured for each antenna port group, the cyclic shift parameter corresponding to one antenna port group is used to determine the cyclic shift parameter of all antenna ports in that antenna port group.

Optionally, the at least two antenna port groups are obtained by dividing the 8 antenna ports into different groups sequentially according to port numbers. Or, the at least two antenna port groups are obtained by dividing the 8 antenna ports into a group containing even-numbered ports and a group containing odd-numbered ports. Or, the at least two antenna port groups are obtained by grouping according to predefined combinations in a protocol. Or, the at least two antenna port groups are obtained by dividing odd-numbered ports in the 8 antenna ports into at least two first antenna port groups sequentially and dividing even-numbered ports in the 8 antenna ports into at least two second antenna port groups sequentially.

For example, the number of antenna ports of the SRSs is $N_{ap}^{SRS} = 8$, and port numbers of the 8 antenna ports are $P_i = 1000 + i$, $i \in \{0,1,2,3,4,5,6,7\}$.

Optionally, the configuration information of the SRS resource also includes that a maximum value of a cyclic shift parameter of the transmission combs corresponding to the at least two antenna port groups is $n_{SRS}^{cs,max}$, and a value range of the cyclic shift parameter $n_{SRS}^{cs}$ configured for the 8 antenna ports is $n_{SRS}^{cs} \in \{0,1,2,...,n_{SRS}^{cs,max} - 1\}$.

For example, a maximum value of a number of the cyclic shift parameter supported by the transmission comb parameter is 8, and the value range of $n_{SRS}^{cs}$ is $n_{SRS}^{cs} \in \{0,1,...,n_{SRS}^{cs,max} - 1\}$, then the terminal generates the SRS resource by using all 8 cyclic shift parameters.

For example, a maximum value of a number of the cyclic shift parameters supported by the transmission comb parameter is 12, and the value range of $n_{SRS}^{cs}$ is $n_{SRS}^{cs} \in \{0,1,...,n_{SRS}^{cs,max} - 1\}$, then the terminal generates the SRS resource by using some of the 12 cyclic shift parameters, e.g., generates the SRS resource by actually using 8 of the 12 cyclic shift parameters.

For example, a function of the SRS resource includes one of: codebook; antenna switching; or non-codebook.

For example, the network device may send allocation information of the SRSs to the terminal by a high-layer signaling.

At step 1020, SRSs corresponding to at least two antenna port groups are received on PRs corresponding to different transmission combs simultaneously, in which the at least two antenna port groups are obtained based on grouping the 8 antenna ports.

Optionally, the terminal receives the SRSs corresponding to at least two antenna port groups on PRs corresponding to transmission combs in different frequency domain dimensions simultaneously, or the terminal receives the SRSs corresponding to at least two antenna port groups on PRs corresponding to transmission combs in different time domain dimensions simultaneously.

In conclusion, according to the method for receiving an SRS provided by the embodiments, the 8 antenna ports in the SRS resource are divided into the at least two antenna port groups. After sending the configuration information of the SRS resource to the terminal, the network device receives the SRSs corresponding to the at least two antenna port groups on the PRs corresponding to different transmission combs simultaneously. This method is used to support implementation of related functions in a situation where the terminal uses the 8 sending antenna ports, for example, used to support codebook-based channel quality sounding in a situation where the terminal uses the 8 sending antenna ports, or used to support non-codebook-based channel quality sounding in a situation where the terminal uses the 8 sending antenna ports, or used to support channel quality sounding during antenna switching in a situation where the terminal uses the 8 sending antenna ports.

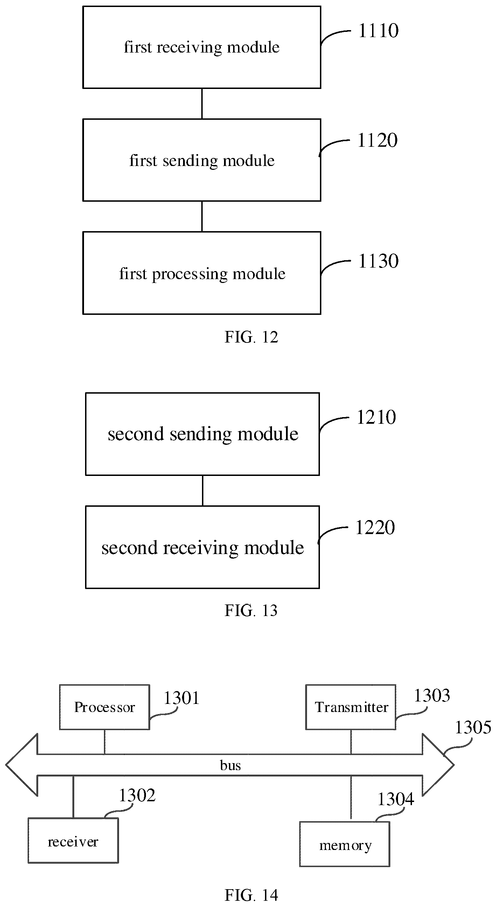

FIG. 12 is a block diagram illustrating an apparatus for sending an SRS according to an exemplary embodiment. The apparatus can be implemented as part or all of a UE through software, hardware, or a combination of the software and the hardware. The apparatus includes:

a first receiving module 1110, configured to receive configuration information of an SRS resource, the SRS resource including 8 antenna ports; and
a first sending module 1120, configured to map SRSs corresponding to at least two antenna port groups to physical resources corresponding to different transmission combs, and send the SRSs corresponding to the at least two antenna port groups simultaneously, in which the at least two antenna port groups are obtained based on grouping the 8 antenna ports.

In some embodiments, the first sending module 1120 is configured to:

map the SRSs corresponding to the at least two antenna port groups to the physical resources corresponding to the at least two transmission combs in a frequency domain dimension and send the SRSs corresponding to the at least two antenna port groups simultaneously;
in which the antenna port groups have a one-to-one correspondence with the transmission combs.

In some embodiments, time-domain locations of transmission combs corresponding to the at least two antenna port groups are identical.

In some embodiments, transmission comb parameters $K_{TC}$ of transmission combs corresponding to the at least two antenna port groups are identical.

In some embodiments, frequency-domain offset parameters $\bar{k}_{TC}$ of transmission combs corresponding to the at least two antenna port groups are different, and a value of $\bar{k}_{TC}$ is a non-negative integer less than $K_{TC}$.

In some embodiments, the apparatus also includes a first processing module 1130.

The first receiving module 1110 is configured to receive a first frequency-domain offset parameter of a transmission comb corresponding to a first antenna port group, the first antenna port group being one of the at least two antenna port groups.

The first processing module 1130 is configured to calculate other frequency-domain offset parameters of transmission combs corresponding to other antenna port groups based on the first frequency-domain offset parameter, other antenna port groups being antenna port groups other than the first antenna port group in the at least two antenna port groups.

In some embodiments, the first receiving module 1110 is configured to receive frequency-domain offset parameters of transmission combs corresponding to the at least two antenna port groups.

In some embodiments, the first sending module 1120 is configured to:
map the SRSs corresponding to the at least two antenna port groups to the physical resources corresponding to the at least two transmission combs in a time domain dimension and send the SRSs corresponding to the at least two antenna port groups simultaneously.

The antenna port groups have a one-to-one correspondence with the transmission combs.

In some embodiments, time-domain locations of transmission combs corresponding to the at least two antenna port groups are different and adjacent.

In some embodiments, transmission comb parameters $K_{TC}$ of transmission combs corresponding to the at least two antenna port groups are identical.

In some embodiments, frequency-domain offset parameters $\bar{k}_{TC}$ of transmission combs corresponding to the at least two antenna port groups are identical, and a value of $\bar{k}_{TC}$ is a non-negative integer less than $K_{TC}$.

In some embodiments, the first receiving module 1110 is configured to receive one frequency-domain offset parameter of the transmission combs corresponding to the at least two antenna port groups.

In some embodiments, a maximum value of a cyclic shift parameter of transmission combs corresponding to the at least two antenna port groups is $n_{SRS}^{cs,max}$, a value range of the cyclic shift parameter $n_{SRS}^{cs}$ configured for the 8 antenna ports is $n_{SRS}^{cs} \in \{0,1,2,...,n_{SRS}^{cs,max} - 1\}$.

In some embodiments, the apparatus also includes the first processing module 1130.

The first receiving module 1110 is configured to receive a configured cyclic shift parameter $n_{SRS}^{cs}$.

The first processing module 1130 is configured to calculate a cyclic shift parameter corresponding to all antenna ports in the at least two antenna port groups based on the cyclic shift parameter.

In some embodiments, the apparatus also includes the first processing module 1130.

The first receiving module 1110 is configured to receive a cyclic shift parameter corresponding to each of the at least two antenna port groups.

The first processing module 1130 is configured to calculate a cyclic shift parameter corresponding to all ports in the antenna port group based on the cyclic shift parameter configured for the antenna port group.

In some embodiments,

the at least two antenna port groups are obtained by sequentially grouping the 8 antenna ports according to port numbers; or

the at least two antenna port groups are obtained by grouping the 8 antenna ports based on odd and even of port numbers; or

the at least two antenna port groups are obtained by grouping according to predefined combinations in a protocol; or

the at least two antenna port groups are obtained by sequentially grouping odd-numbered ports in the 8 antenna ports into at least two first antenna port groups and sequentially grouping even-numbered ports in the 8 antenna ports into at least two second antenna port groups.

In some embodiments, a number of antenna ports of the SRSs is $N_{ap}^{SRS} = 8$ ; and port numbers of the 8 antenna ports are $P_i$ =1000+i, iE {0,1,2,3,4,5,6,7}.

In some embodiments, a function of the SRS resource includes one of:

codebook;

antenna switching; or

non-codebook.

FIG. 13 is a block diagram illustrating an apparatus for receiving an SRS according to an exemplary embodiment. The apparatus can be implemented as part or all of a network device through software, hardware, or a combination of the software and the hardware. The apparatus includes:

a second sending module 1210, configured to send configuration information of an SRS resource, the SRS resource including 8 antenna ports; and

a second receiving module 1220, configured to receive SRSs corresponding to at least two antenna port groups on physical resources corresponding to different transmission combs simultaneously, in which the at least two antenna port groups are obtained based on grouping the 8 antenna ports.

In some embodiments, the second receiving module 1220 is configured to receive the SRSs corresponding to the at least two antenna port groups on PRs corresponding to transmission combs in different frequency domain dimensions simultaneously.

In some embodiments, the configuration information of the SRS resource, includes:

one time-domain location of transmission combs corresponding to the at least two antenna port groups.

In some embodiments, the configuration information of the SRS resource, includes:

one transmission comb parameter $K_{TC}$ corresponding to the at least two antenna port groups.

In some embodiments, the configuration information of the SRS resource, includes:

one frequency-domain offset parameter of a transmission comb corresponding to a first antenna port group in the at least two antenna port groups, the first antenna port group being one of the at least two antenna port groups; or

frequency-domain offset parameters of at least two transmission combs corresponding to the at least two antenna port groups.

In some embodiments, the second receiving module 1220 is configured to receive the SRSs corresponding to the at least two antenna port groups on the PRs corresponding to transmission combs in different time domain dimensions simultaneously.

In some embodiments, the configuration information of the SRS resource, includes:

at least two adjacent time-domain locations of transmission combs corresponding to the at least two antenna port groups.

In some embodiments, the configuration information of the SRS resource, includes:

one transmission comb parameter $K_{TC}$ corresponding to the at least two antenna port groups.

In some embodiments, the configuration information of the SRS resource, includes:

one frequency-domain offset parameter corresponding to the at least two antenna port group.

In some embodiments, the configuration information of the SRS resource, includes:

one cyclic shift parameter corresponding to the at least two antenna port groups; or
one cyclic shift parameter corresponding to each antenna port of the at least two antenna port groups.

In some embodiments, the at least two antenna port groups are obtained by sequentially grouping the 8 antenna ports according to port numbers; or

the at least two antenna port groups are obtained by sequentially grouping the 8 antenna ports based on odd and even of port numbers; or
the at least two antenna port groups are obtained by grouping according to predefined combinations in a protocol; or
the at least two antenna port groups are obtained by sequentially grouping odd-numbered ports in the 8 antenna ports into at least two first antenna port groups and sequentially grouping even-numbered ports in the 8 antenna ports into at least two second antenna port groups.

In some embodiments, a number of antenna ports of the SRSs is $N_{ap}^{SRS} = 8$; and port numbers of the 8 antenna ports are $P_i = 1000+i$, $i \in \{0,1,2,3,4,5,6,7\}$.

In some embodiments, a function of the SRS resource includes one of:

codebook;
antenna switching; or
non-codebook.

FIG. 14 is a schematic diagram illustrating a UE according to an exemplary embodiment. The UE includes: a processor 1301, a receiver 1302, a transmitter 1303, a memory 1304 and a bus 1305.

The processor 1301 includes one or more processing cores. The processor 1301 executes various functional applications and information processing by running software programs and modules.

The receiver 1302 and the transmitter 1303 can be implemented as one communication component, which can be a communication chip.

The memory 1304 is connected to the processor 1301 through the bus 1305.

The memory 1304 may be used to store at least one instruction, and the processor 1301 is used to execute the at least one instruction to implement each step in the above embodiments of the method for sending an SRS.

The memory 1304 may be implemented by any type of volatile or non-volatile storage device or combination thereof. The volatile or non-volatile storage device includes, but is not limited to, a magnetic or optical disk, an electrically erasable programmable read-only memory (EEPROM), an erasable programmable read only memory (EPROM), a static random-access memory (SRAM), a read only memory (ROM), a magnetic memory, a flash memory, a programmable ROM (PROM).

In an exemplary embodiment, a non-transitory computer-readable storage medium including instructions is provided, such as a memory including instructions. The above instructions can be executed by a processor of the UE to complete the above method for sending an SRS. For example, the non-transitory computer-readable storage medium may be a ROM, a random access memory (RAM), a compact disc read-only memory (CD-ROM), a magnetic tape, a floppy disk and an optical data storage device, etc.

A non-transitory computer-readable storage medium including instructions is also provided. When the instructions in the non-transitory computer storage medium are executed by a processor of the UE, the UE is caused to perform the above method for sending an SRS.

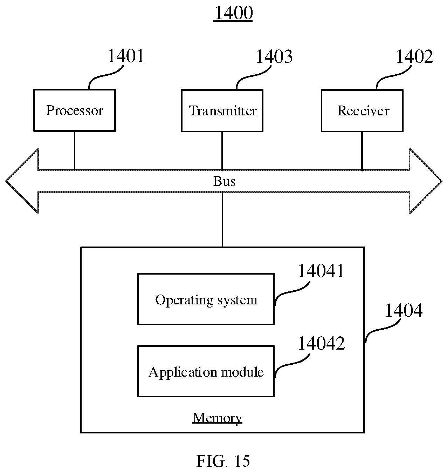

FIG. 15 is a schematic diagram illustrating a network device 1400 according to an exemplary embodiment. The network device 1400 may be a base station.

The network device 1400 may include: a processor 1401, a receiver 1402, a transmitter 1403, and a memory 1404. The receiver 1402, the transmitter 1403 and the memory 1404 are respectively connected to the processor 1401 through a bus.

The processor 1401 includes one or more processing cores. The processor 1401 executes the method for receiving an SRS performed by the network device in the embodiments of the disclosure by running software programs and modules. The memory 1404 may be used to store software programs and modules. In detail, the memory 1404 can store an operating system 14041 and an application module 14042 required by at least one function. The receiver 1402 is used to receive communication data sent by other devices, and the transmitter 1403 is used to send communication data to other devices.

An exemplary embodiment of the disclosure also provides a computer-readable storage medium. The computer-readable storage medium stores at least one instruction, at least one program segment, a code set or an instruction set. The at least one instruction, the at least one program segment, the code set or the instruction set is loaded and executed by the processor to implement the method for sending an SRS or the method for receiving an SRS in the above method embodiments.

An exemplary embodiment of the disclosure also provides a computer program product including computer instructions. The computer instructions are stored in a computer-readable storage medium and can be read by a processor of a computer device from the computer-readable storage medium. When the processor executes the computer instructions, the computer is caused to perform the method for sending an SRS or the method for receiving an SRS in the above method embodiments.

It should be understood that the term "a plurality of" mentioned in this article means two or more. The term "and/or" describes the relation between related objects, and is used to indicate three relations. For example, A and/or B means that A exists alone, A and B both exist, and B exists alone. The character "/" generally indicates that the related objects before the character "/" are in an "or" relation.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

**Claims**

1. A method for sending a sounding reference signal (SRS), performed by a terminal, comprising:

   receiving configuration information of an SRS resource, the SRS resource comprising 8 antenna ports; and
   mapping SRSs corresponding to at least two antenna port groups to physical resources corresponding to different transmission combs, and sending the SRSs corresponding to the at least two antenna port groups simultaneously, wherein the at least two antenna port groups are obtained based on grouping the 8 antenna ports.

2. The method of claim 1, wherein mapping the SRSs corresponding to the at least two antenna port groups to the physical resources corresponding to different transmission combs, and sending the SRSs corresponding to the at least two antenna port groups simultaneously comprises:

   mapping the SRSs corresponding to the at least two antenna port groups to the physical resources corresponding to the at least two transmission combs in a frequency domain dimension and sending the SRSs corresponding to the at least two antenna port groups simultaneously;
   wherein the antenna port groups have a one-to-one correspondence with the transmission combs.

3. The method of claim 2, wherein time-domain locations of transmission combs corresponding to the at least two antenna port groups are identical.

4. The method of claim 2, wherein transmission comb parameters $K_{TC}$ of transmission combs corresponding to the at least two antenna port groups are identical.

5. The method of claim 2, wherein frequency-domain offset parameters $\overline{k}_{TC}$ of transmission combs corresponding to the at least two antenna port groups are different, and a value of $\overline{k}_{TC}$ is a non-negative integer less than $K_{TC}$.

6. The method of claim 5, wherein receiving the configuration information of the SRS resource comprises:

   receiving a first frequency-domain offset parameter of a transmission comb corresponding to a first antenna port group, the first antenna port group being one of the at least two antenna port groups;
   the method further comprising:
   calculating other frequency-domain offset parameters of transmission combs corresponding to other antenna port groups based on the first frequency-domain offset parameter, other antenna port groups being antenna port groups other than the first antenna port group in the at least two antenna port groups.

7. The method of claim 6, wherein calculating other frequency-domain offset parameters of transmission combs corresponding to other antenna port groups comprises:

calculating other frequency-domain offset parameters based on an adjacent transmission comb principle; or
calculating other frequency-domain offset parameters based on a uniform distribution principle; or
calculating other frequency-domain offset parameters based on a maximum interval principle; or
calculating other frequency-domain offset parameters based on other predefined principles.

8. The method of claim 5, wherein receiving the configuration information of the SRS resource comprises:
receiving frequency-domain offset parameters of transmission combs corresponding to the at least two antenna port groups.

9. The method of claim 1, wherein mapping the SRSs corresponding to the at least two antenna port groups to the physical resources corresponding to different transmission combs and sending the SRSs corresponding to the at least two antenna port groups simultaneously comprises:

mapping the SRSs corresponding to the at least two antenna port groups to the physical resources corresponding to the at least two transmission combs in a time domain dimension and sending the SRSs corresponding to the at least two antenna port groups simultaneously;
wherein the antenna port groups have a one-to-one correspondence with the transmission combs.

10. The method of claim 9, wherein time-domain locations of transmission combs corresponding to the at least two antenna port groups are different and adjacent.

11. The method of claim 9, wherein transmission comb parameters $K_{\text{TC}}$ of transmission combs corresponding to the at least two antenna port groups are identical.

12. The method of claim 9, wherein frequency-domain offset parameters $\overline{k}_{\text{TC}}$ of transmission combs corresponding to the at least two antenna port groups are identical, and a value of $\overline{k}_{\text{TC}}$ is a non-negative integer less than $K_{\text{TC}}$.

13. The method of claim 12, wherein receiving the configuration information of the SRS resource comprises:
receiving one frequency-domain offset parameter of the transmission combs corresponding to the at least two antenna port groups.

14. The method of any one of claims 1-13, wherein a maximum value of a cyclic shift parameter of transmission combs corresponding to the at least two antenna port groups is $n_{\text{SRS}}^{\text{cs,max}}$, a value range of the cyclic shift parameter $n_{\text{SRS}}^{\text{cs}}$ configured for the 8 antenna ports is $n_{\text{SRS}}^{\text{cs}} \in \{0,1,2,...,n_{\text{SRS}}^{\text{cs,max}} - 1\}$.

15. The method of claim 14, wherein receiving the configuration information of the SRS resource comprises:

receiving a configured cyclic shift parameter $n_{\text{SRS}}^{\text{cs}}$;
the method further comprising:
calculating a cyclic shift parameter corresponding to all antenna ports in the at least two antenna port groups based on the cyclic shift parameter.

16. The method of claim 14, wherein receiving the configuration information of the SRS resource comprises:
receiving a cyclic shift parameter corresponding to each of the at least two antenna port groups, and calculating a cyclic shift parameter corresponding to all ports in the antenna port group based on the cyclic shift parameter configured for the antenna port group.

17. The method of any one of claims 1-13, wherein

the at least two antenna port groups are obtained by sequentially grouping the 8 antenna ports according to port numbers; or

the at least two antenna port groups are obtained by grouping the 8 antenna ports based on odd and even of port numbers; or

the at least two antenna port groups are obtained by grouping according to predefined combinations in a protocol; or

the at least two antenna port groups are obtained by sequentially grouping odd-numbered ports in the 8 antenna ports into at least two first antenna port groups and sequentially grouping even-numbered ports in the 8 antenna ports into at least two second antenna port groups.

**18.** The method of any one of claims 1-13, wherein

a number of antenna ports of the SRSs is $N_{ap}^{SRS}=8$; and

port numbers of the 8 antenna ports are $P_i$=1000+i, i∈{0,1,2,3,4,5,6,7}.

**19.** The method of any one of claims 1-13, wherein a function of the SRS resource comprises one of:

codebook;

antenna switching; or

non-codebook.

**20.** A method for receiving a sounding reference signal (SRS), performed by a network device, comprising:

sending configuration information of an SRS resource, the SRS resource comprising 8 antenna ports; and receiving SRSs corresponding to at least two antenna port groups on physical resources corresponding to different transmission combs simultaneously, wherein the at least two antenna port groups are obtained based on grouping the 8 antenna ports.

**21.** The method of claim 20, wherein receiving the SRSs corresponding to the at least two antenna port groups on the physical resources corresponding to different transmission combs simultaneously comprises:

receiving the SRSs corresponding to the at least two antenna port groups on physical resources corresponding to transmission combs in different frequency domain dimensions simultaneously.

**22.** The method of claim 21, wherein the configuration information of the SRS resource comprises: one time-domain location of transmission combs corresponding to the at least two antenna port groups.

**23.** The method of claim 21, wherein the configuration information of the SRS resource comprises:

one transmission comb parameter $K_{TC}$ corresponding to the at least two antenna port groups .

**24.** The method of claim 21, wherein the configuration information of the SRS resource comprises:

one frequency-domain offset parameter of a transmission comb corresponding to a first antenna port group in the at least two antenna port groups, the first antenna port group being one of the at least two antenna port groups; or frequency-domain offset parameters of at least two transmission combs corresponding to the at least two antenna port groups.

**25.** The method of claim 20, wherein receiving the SRSs corresponding to the at least two antenna port groups on the physical resources corresponding to different transmission combs simultaneously comprises:

receiving the SRSs corresponding to the at least two antenna port groups on the physical resources corresponding to transmission combs in different time domain dimensions simultaneously.

**26.** The method of claim 25, wherein the configuration information of the SRS resource comprises:

at least two adjacent time-domain locations of transmission combs corresponding to the at least two antenna port groups.

**27.** The method of claim 25, wherein the configuration information of the SRS resource comprises:

one transmission comb parameter $K_{TC}$ corresponding to the at least two antenna port groups.

**28.** The method of claim 25, wherein the configuration information of the SRS resource comprises:
one frequency-domain offset parameter corresponding to the at least two antenna port groups.

**29.** The method of any one of claims 20-28, wherein the configuration information of the SRS resource comprises:

one cyclic shift parameter corresponding to the at least two antenna port groups; or
one cyclic shift parameter corresponding to each antenna port of the at least two antenna port groups.

**30.** The method of any one of claims 20-28, wherein

the at least two antenna port groups are obtained by sequentially grouping the 8 antenna ports according to port numbers; or
the at least two antenna port groups are obtained by sequentially grouping the 8 antenna ports based on odd and even of port numbers; or
the at least two antenna port groups are obtained by grouping according to predefined combinations in a protocol; or
the at least two antenna port groups are obtained by sequentially grouping odd-numbered ports in the 8 antenna ports into at least two first antenna port groups and sequentially grouping even-numbered ports in the 8 antenna ports into at least two second antenna port groups.

**31.** The method of any one of claims 20-28, wherein

a number of antenna ports of the SRSs is $N_{ap}^{SRS} = 8$ ; and
port numbers of the 8 antenna ports are $P_i = 1000+i$, $i \in \{0,1,2,3,4,5,6,7\}$.

**32.** The method of any one of claims 20-28, wherein a function of the SRS resource comprises one of:

codebook;
antenna switching; or
non-codebook.

**33.** An apparatus for sending a sounding reference signal (SRS), comprising:

a first receiving module, configured to receive configuration information of an SRS resource, the SRS resource comprising 8 antenna ports; and
a first sending module, configured to map SRSs corresponding to at least two antenna port groups to physical resources corresponding to different transmission combs and sending the SRSs corresponding to the at least two antenna port groups simultaneously, wherein the at least two antenna port groups are obtained based on grouping the 8 antenna ports.

**34.** An apparatus for receiving a sounding reference signal (SRS), comprising:

a second sending module, configured to send configuration information of an SRS resource, the SRS resource comprising 8 antenna ports; and
a second receiving module, configured to receive SRSs corresponding to at least two antenna port groups on physical resources corresponding to different transmission combs simultaneously, wherein the at least two antenna port groups are obtained based on grouping the 8 antenna ports.

**35.** A terminal, comprising:

a processor;
a transceiver coupled to the processor;
wherein the processor is configured to load and execute executable instructions to implement the method for sending an SRS of any one of claims 1-19.

**36.** A network device, comprising:

a processor;

a transceiver coupled to the processor;

wherein the processor is configured to load and execute executable instructions to implement the method for receiving an SRS of any one of claims 20-32.

37. A computer-readable storage medium having at least one instruction, at least one program segment, a code set or an instruction set stored thereon, wherein when the at least one instruction, the at least one program segment, the code set or the instruction set is loaded and executed by a processor, the method for sending an SRS of any one of claims 1-19 or the method for receiving an SRS of any one of claims 20-32 is implemented.

38. A computer program product comprising computer instructions, wherein the computer instructions are stored in a computer-readable storage medium and can be read by a processor of a computer device from the computer-readable storage medium, when the computer instructions are executed by the processor, the computer is caused to implement the method for sending an SRS of any one of claims 1-19 or the method for receiving an SRS of any one of claims 20-32.

FIG. 1

receiving configuration information of an SRS resource, the SRS resource including 8 antenna ports — 210

mapping SRSs corresponding to at least two antenna port groups to physical resources corresponding to different transmission combs, and sending the SRSs corresponding to the at least two antenna port groups simultaneously, wherein the at least two antenna port groups are obtained based on grouping the 8 antenna ports — 220

FIG. 2

☒ Ports 0, 1, 2, 3

■ Ports 4, 5, 6, 7

One PRB

One slot

FIG. 3

receiving configuration information of an SRS resource, the SRS resource including 8 antenna ports ⟍ 210

mapping the SRSs corresponding to the at least two antenna port groups to the physical resources corresponding to the at least two transmission combs in a frequency domain dimension and sending the SRSs corresponding to the at least two antenna port groups simultaneously ⟍ 420

FIG. 4

FIG. 5

Ports 0, 1, 2, 3

Ports 4, 5, 6, 7

One PRB

One PRB

One slot

FIG. 6

receiving configuration information of an SRS resource, the SRS resource including 8 antenna ports — 210

mapping the SRSs corresponding to the at least two antenna port groups to the physical resources corresponding to the at least two transmission combs in a time domain dimension and sending the SRSs corresponding to the at least two antenna port groups simultaneously — 720

FIG. 7

FIG. 8

FIG. 9

| | Ports 1, 3 | | Ports 0, 2 |
| | Ports 5, 7 | | Ports 4, 6 |

One PRB

One PRB

0  1  2  3  4  5  6  7  8  9  10  11  12  13

One slot

FIG. 10

| sending configuration information of an SRS resource, the SRS resource including 8 antenna ports | 1010 |

| receiving SRSs corresponding to at least two antenna port groups on physical resources corresponding to different transmission combs simultaneously, wherein the at least two antenna port groups are obtained based on grouping the 8 antenna ports | 1020 |

FIG. 11

first receiving module ⎯ 1110

first sending module ⎯ 1120

first processing module ⎯ 1130

FIG. 12

second sending module ⎯ 1210

second receiving module ⎯ 1220

FIG. 13

Processor 1301

Transmitter 1303

1305

bus

receiver 1302

memory 1304

FIG. 14

<u>1400</u>

1401           1403           1402

| Processor | Transmitter | Receiver |

Bus

| Operating system | 14041 |
| Application module | 14042 |

Memory    1404

FIG. 15

## INTERNATIONAL SEARCH REPORT

| | International application No. |
|---|---|
| | **PCT/CN2022/079154** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 参考信号, SRS, 天线端口, 映射, 梳, comb, 端口组, 参数, 偏移值, 位置, antenna port, mapping, port group, parameter, offset, position

**C. DOCUMENTS CONSIDERED TO BE RELEVANT**

| Category* | Citation of document, with indication, where appropriate, of the relevant passages | Relevant to claim No. |
|---|---|---|
| X | CN 111835488 A (VIVO COMMUNICATION TECHNOLOGY CO., LTD.) 27 October 2020 (2020-10-27)<br> description, paragraphs 0002-0163 | 1-38 |
| A | CN 111464275 A (RESEARCH INSTITUTE OF CHINA MOBILE COMMUNICATIONS CORPORATION et al.) 28 July 2020 (2020-07-28)<br> entire document | 1-38 |
| A | CN 111758272 A (BEIJING XIAOMI MOBILE SOFTWARE CO., LTD.) 09 October 2020 (2020-10-09)<br> entire document | 1-38 |
| A | WO 2012103774 A1 (ZTE CORP.) 09 August 2012 (2012-08-09)<br> entire document | 1-38 |
| A | LENOVO et al. "Enhancements on SRS"<br> *33GPP TSG RAN WG1#104bis-e R1-2102842GPP TSG RAN WG1#104bis-e R1-2102842,*<br> 20 April 2021 (2021-04-20),<br> entire document | 1-38 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2022** | **02 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/079154**

| Patent document cited in search report | | | Publication date (day/month/year) | Patent family member(s) | | | Publication date (day/month/year) |
|---|---|---|---|---|---|---|---|
| CN | 111835488 | A | 27 October 2020 | None | | | |
| CN | 111464275 | A | 28 July 2020 | None | | | |
| CN | 111758272 | A | 09 October 2020 | None | | | |
| WO | 2012103774 | A1 | 09 August 2012 | CN | 102075274 | A | 25 May 2011 |

Form PCT/ISA/210 (patent family annex) (January 2015)